# FASCICULE DE BREVET EUROPEEN

(11) **EP 2 930 316 B1**
(45) Date de publication et mention de la délivrance du brevet: **27.01.2021**
(21) Numéro de dépôt: 14164291.8
(22) Date de dépôt: 10.04.2014
(51) Int. Cl.: F01D 21/04, F01D 25/24, F02C 7/04

(54) **Carter composite de compresseur de turbomachine axiale**
Verbundwerkstoffgehäuse eines Kompressors eines axialen Turbotriebwerks
Composite axial turbomachine compressor housing

(43) Date de publication de la demande: 14.10.2015
(73) Titulaire: Safran Aero Boosters SA, 4041 Herstal (BE)
(72) Inventeur: Derclaye, Alain, 4218 Couthuin (BE); Durie, Angela, 8301 Knokke-Heist (BE)
(74) Mandataire: Lecomte & Partners

(56) Documents cités:
- EP-A2- 1 584 797
- US-A1- 2012 270 006

## Description

### Domaine technique

L'invention a trait à un carter composite de turbomachine axiale. Plus précisément, l'invention a trait à un carter composite de turbomachine comprenant une matrice et un renfort avec des plis fibreux. L'invention a également trait à une turbomachine avec un carter composite.

### Technique antérieure

Afin d'alléger une turbomachine, notamment d'aéronef, il est connu d'employer des matériaux composites. De tels matériaux sont employés pour réaliser des aubes, des carters annulaires. Ces derniers comprennent généralement une paroi essentiellement fine qui permet de délimiter et de guider un flux dans la turbomachine.

Une telle paroi composite comprend généralement une matrice organique et un renfort fibreux densifié par la matrice. Le renfort fibreux peut comprendre une préforme tissée de manière tridimensionnelle, et/ou comprendre un empilement de plis fibreux tissés.

Un tel carter est connu du document US2012/0270006 A1. Il divulgue un carter composite avec une paroi tubulaire réalisée en un matériau composite. Le matériau composite présente une matrice et un empilement de plis avec des fibres agencées selon deux directions perpendiculaires. L'orientation des plis est modulée selon l'épaisseur de la paroi tubulaire, de sorte à privilégier des orientations particulières de fibres à certains endroits de la paroi. Cet agencement de fibres permet d'améliorer la résistance mécanique du carter, notamment au niveau de la bride annulaire de fixation.

Cet enseignement optimise la résistance du carter composite. Cependant, sa rigidité reste faible, et peut devenir insuffisante dans le cas de carters externe de compresseur puisque ces carters sont soumis à de fortes contraintes. En cas de perte d'une aube de soufflante, la turbomachine présente de grandes amplitudes de vibration, et certaines aubes rotoriques de compresseur peuvent venir en contact du carter composite. Ce dernier est alors fortement sollicité. Soulignons également que les contraintes thermiques et l'humidité amputent la résistance mécanique du carter.

### Résumé de l'invention

### Problème technique

L'invention a pour objectif de résoudre au moins un des problèmes posés par l'art antérieur. Plus précisément, l'invention a pour objectif d'optimiser la résistance et la masse d'un carter composite avec une paroi annulaire comprenant une matrice renforcée par un renfort fibreux tissé. L'invention a également pour objectif d'améliorer la résistance mécanique d'une paroi annulaire composite de carter en cas de contact avec des aubes rotoriques.

### Solution technique

L'invention a trait à un carter composite de turbomachine axiale, notamment de compresseur, le carter comprenant une paroi généralement circulaire avec une matrice et un renfort fibreux tissé, le renfort fibreux présente, selon son épaisseur, deux couches externes et une couche centrale disposée entre les couches externes, lesdites couches comprenant des fibres s'étendant généralement selon la direction axiale de la paroi circulaire, et des fibres s'étendant généralement selon la circonférence de la paroi circulaire, remarquable en ce qu'au moins une des couches externes comprend une différence de proportion entre les fibres axiales et les fibres circonférentielles, les fibres axiales étant majoritaires.

Selon un mode avantageux de l'invention, la couche centrale comprend une différence de proportion entre les fibres axiales et les fibres circonférentielles, les fibres circonférentielles étant majoritaires.

Selon un mode avantageux de l'invention, le milieu de l'épaisseur du renfort fibreux est situé dans la couche centrale, chaque couche représente au moins 10%, préférentiellement au moins de 20% du renfort fibreux.

Selon un mode avantageux de l'invention, le renfort fibreux comprend deux couches intercalaires chacune disposée entre la couche centrale et l' une des couches externes.

Selon un mode avantageux de l'invention, les couches intercalaires comprennent des fibres hélicoïdales tissées selon des directions généralement perpendiculaires et inclinées à 45° par rapport à la circonférence de la paroi.

Selon un mode avantageux de l'invention, sur la majorité de la surface de la paroi, le renfort fibreux présente une symétrie dans l'agencement des fibres et/ou une symétrie de proportion de fibres selon l'épaisseur de la paroi et par rapport au milieu de l'épaisseur de la paroi.

Selon un mode avantageux de l'invention, le renfort fibreux comprend un empilement de plis fibreux tissés, au moins un des plis est tissé de sorte à être préformé selon la forme de la paroi, et la majorité des plis tissés s'étendent sur toute la longueur axiale de la paroi.

Selon un mode avantageux de l'invention, chaque couche comprend une majorité de plis fibreux identiques dont les directions de fibres majoritaires sont alignées.

Selon un mode avantageux de l'invention, les plis formant les limites des couches présentent des orientations de fibres parallèles et des directions de fibres majoritaires alignées, éventuellement lesdits plis sont identiques.

Selon un mode avantageux de l'invention, les fibres des plis sont agencées en torons tissés, les torons étant tissés selon une direction de trame et une direction de chaîne, les torons de trame étant disposés le long de l'axe de la turbomachine, et les torons de chaîne étant disposés selon la circonférence de la paroi, préférentiellement au moins une des couches externes comprend entre 65% et 85% des fibres axiales, et/ou la couche centrale comprend entre 65% et 85% des fibres circonférentielles.

Selon un mode avantageux de l'invention, la paroi présente un diamètre minimal DM à l'une de ses extrémités axiale, l'empilement comprenant des plis additionnels intercalés au niveau du diamètre minimal DM, entre des plis s'étendant axialement sur toute la longueur axiale de la paroi.

Selon un mode avantageux de l'invention, l'empilement comprend de 4 à 40 plis avec des fibres de même nature, préférentiellement de 10 à 20 plis, plus préférentiellement de 12 à 16 plis, éventuellement chaque couche comprend au moins deux plis tissés.

Selon un mode avantageux de l'invention, la paroi comprend plusieurs rangées annulaires d'orifices de fixation d'aubes statoriques, lesdites rangées annulaires d'orifices étant réparties axialement le long de la paroi.

Selon un mode avantageux de l'invention, le carter comprend au moins une, préférentiellement au moins deux brides annulaires s'étendant radialement et délimitant axialement la paroi, chaque bride annulaire étant formée à l'aide du renfort fibreux.

Selon un mode avantageux de l'invention, la majorité de fibres est une majorité du nombre de fibres, ou la majorité de fibres est une majorité massique.

Selon un mode avantageux de l'invention, entre 15% et 35% des fibres des plis disposés dans la couche centrale s'étendent le long de la direction axiale de la paroi circulaire, et/ou entre 15% et 35% des fibres des plis disposés dans au moins une des couches externes s'étendent selon la circonférence de la paroi.

Selon un mode avantageux de l'invention, la paroi annulaire est formée de deux demi-coquilles, chaque demi-coquille comprenant un empilement de plis fibreux.

Selon un mode avantageux de l'invention, les fibres de chaque couche sont de même nature.

Selon un mode avantageux de l'invention, l'empilement est généralement homogène selon la direction circonférentielle de la paroi.

Selon un mode avantageux de l'invention, la majorité des plis tissés forment chaque bride annulaire et/ou chaque bride axiale.

Selon un mode avantageux de l'invention, l'empilement présente une symétrie du type de plis et/ou de l'orientation des fibres et/ou de la proportion des fibres selon l'épaisseur de la paroi et par rapport au milieur de l'épaisseur de la paroi

Selon un mode avantageux de l'invention, la paroi comprend au moins une, préférentiellement plusieurs zones annulaires de réception d'aubes statoriques, préférentiellement chaque zone annulaire comprenant des moyens de fixation décrivant des cercles. Les moyens de fixation peuvent être des crochets ou tous moyens adaptés.

Selon un mode avantageux de l'invention, les couches externes et/ou la couche centrale comprennent des plis plus légers que les plis des couches intercalaires. La masse est une masse surfacique.

L'invention a également trait à un carter composite de turbomachine axiale, notamment de compresseur, le carter comprenant une paroi généralement circulaire avec une matrice et un empilement de plis fibreux tissés, l'empilement de plis présente, selon son épaisseur, deux couches externes et une couche centrale disposée entre les couches externes, lesdites couches comprenant des fibres s'étendant généralement selon la direction axiale de la paroi circulaire, et des fibres s'étendant généralement selon la circonférence de la paroi circulaire, remarquable en ce qu'au moins une des couches externes comprend une différence de proportion entre les fibres axiales et les fibres circonférentielles de ses plis, les fibres axiales étant majoritaires.

L'invention a également trait à une turbomachine axiale comprenant un carter composite, remarquable en ce que le carter composite est conforme à l'invention, et en ce que le carter composite est formé de deux demi-carters comprenant chacun des brides axiales permettant la jonction des demi-carters, les brides axiales étant formées à l'aide de l'empilement de plis fibreux tissés.

### Avantages apportés

L'invention permet d'optimiser la résistance mécanique d'un carter composite. Les proportions de fibres varient selon l'épaisseur, en fonction de l'amplitude des déformations auxquelles les fibres sont exposés, et en fonction de la résistance qu'elles peuvent apporter grâce à leurs orientations.

Pour modifier les proportions en fibres, les plis sont renforcés selon une direction, et éventuellement allégés dans l'une ou les autres directions. Les plis peuvent être renforcés en chaîne : plis dits « heavy warp », ou renforcé en trame : plis dits « heavy weft ».

### Brève description des dessins

La figure 1 représente une turbomachine axiale selon l'invention.
La figure 2 est un schéma d'un compresseur de turbomachine selon l'invention.
La figure 3 esquisse une coupe de l'empilement de plis fibreux du carter composite selon l'axe de rotation de la turbomachine.
La figure 4 illustre la déformation axiale d'une portion de carter composite indiquée sur la figure 3 lors d'un contact avec des aubes rotoriques.
La figure 5 esquisse une coupe de l'empilement de plis fibreux selon l'axe 5-5 tracé sur la figure 3.
La figure 6 illustre les différentes couches de l'empilement de plis
La figure 7 illustre la répartition et l'orientation des fibres d'un pli tissé de l'une des couches externes, le pli tissé étant vu en plan.
La figure 8 illustre la répartition et l'orientation des fibres d'un pli tissé de la couche centrale, le pli tissé étant vu en plan.
La figure 9 illustre la répartition et l'orientation des fibres d'un pli tissé de l'une des couches intercalaires, le pli tissé étant vu en plan.

### Description des modes de réalisation

Dans la description qui va suivre, les termes intérieur et extérieur renvoient à un positionnement par rapport à l'axe de rotation d'une turbomachine axiale. La direction axiale est selon l'axe de rotation, et la direction radiale est perpendiculaire à la direction axiale.

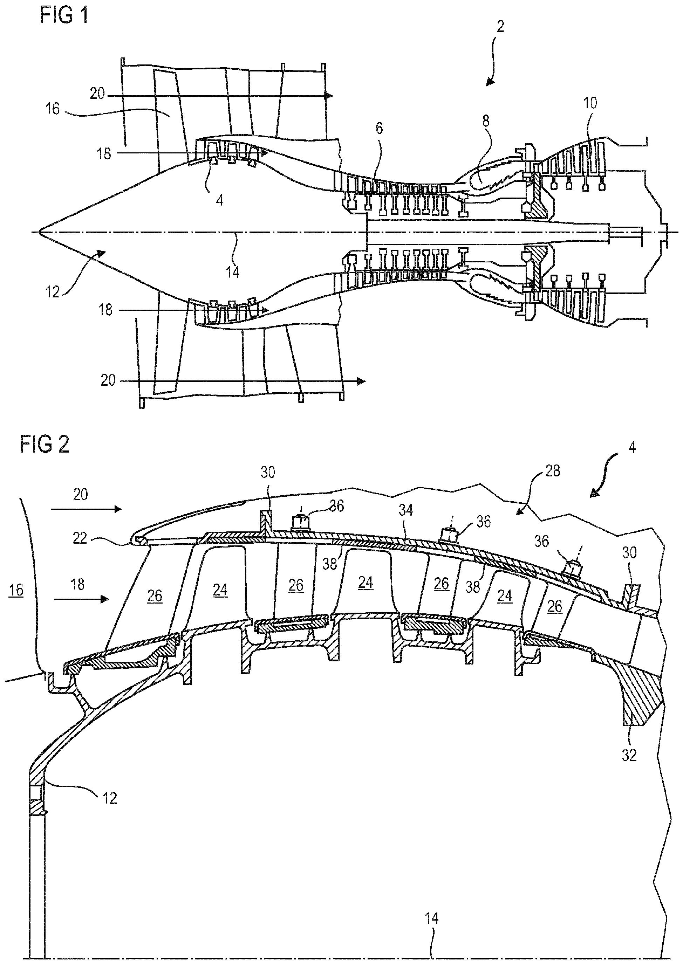

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6.

Les compresseurs comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 10.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés à l'aide de cloisons cylindriques, ou viroles, qui peuvent être intérieures et/ou extérieures.

La figure 2 est une vue en coupe d'un compresseur d'une turbomachine axiale telle que celle de la figure 1. Le compresseur peut être un compresseur basse-pression 4. On peut y observer une partie du fan 16 ainsi que le bec de séparation 22 du flux primaire 18 et du flux secondaire 20. Le rotor 12 peut comprendre plusieurs rangées d'aubes rotoriques 24, en l'occurrence trois.

Le compresseur basse-pression 4 peut comprendre au moins un redresseur, préférentiellement plusieurs redresseurs, en l'occurrence quatre, qui contiennent chacun une rangée annulaire d'aubes statoriques 26. Chaque redresseur est associé au fan 16 ou à une rangée d'aubes rotoriques 24 pour en redresser le flux d'air, de sorte à convertir la vitesse du flux en pression.

Le compresseur comprend au moins un carter 28. Le carter 28 peut présenter une forme généralement circulaire ou tubulaire. Il peut être un carter externe de compresseur et peut être en matériaux composites, ce qui permet de réduire sa masse tout en optimisant sa rigidité. Le carter 28 peut comprendre des brides de fixation 30, par exemple des brides annulaires de fixation 30 pour la fixation du bec de séparation 22 et/ou pour se fixer à un carter intercalaire 32 de soufflante de la turbomachine. Le carter composite assure alors une fonction de lien mécanique entre le bec de séparation 22 et le carter intercalaire 32. Le carter assure également une fonction de centrage du bec de séparation 22 par rapport au carter intercalaire, par exemple à l'aide de ses brides annulaires. Les brides annulaires 30 peuvent être en composite et comprendre des orifices de fixation (non représentés) pour permettre une fixation par boulons, ou par lockbolts. Les brides 30 peuvent comprendre des surfaces de centrage, tels des orifices de centrage.

La carter composite 28 peut comprendre une paroi 34 généralement circulaire ou en arc de cercle, dont les bords peuvent être délimités par les brides 30. La paroi 34 peut présenter un profil de révolution autour de l'axe de rotation 14. La paroi 34 peut être en matériau composite, avec une matrice et un renfort. La paroi 34 peut présenter une forme d'ogive, avec une variation de rayon le long de l'axe 14. Cette évolution du rayon peut s'inverser, le diamètre minimal peut être en aval. La paroi 34 présente une surface intérieure avec une double courbure. La longueur axiale de la paroi 34 peut représenter la majorité du rayon minimal de la surface intérieure de la paroi, éventuellement sa longueur axiale est supérieure ou égale au rayon minimal de la surface intérieure de la paroi 34. La longueur axiale est mesurée selon l'axe de rotation 14.

Les aubes statoriques 26 s'étendent essentiellement radialement depuis la paroi 34, au niveau de zones annulaires de réception d'aubes. Ces zones peuvent comprendre des moyens de fixations telles des gorges annulaires, ou des orifices de fixation. Avantageusement, les orifices sont agencés en rangées annulaires. Celles-ci peuvent être réparties axialement le long de la paroi 34. Les aubes 26 peuvent y être fixées de manière individuelle, ou former des segments d'aubes fixés à la paroi 34.

Les aubes statoriques 26 peuvent comprendre des plateformes, éventuellement munies d'axes de fixation 36 tels des lockbolts, de tiges filetées ou tout autre moyen équivalent. En fonctionnement, les aubes statoriques 26 sont soumises aux efforts de l'écoulement du flux. Ces efforts peuvent être uniquement repris par la paroi 34, en plus du poids propre de chaque aube. Cette configuration signifie que la paroi 34 peut être soumise à l'application d'efforts selon des cercles, lesdits efforts étant variables étant donné que l'écoulement varie lors du fonctionnement de la turbomachine. L'irrégularité des efforts favorise la naissance de modes de déformation composés et complexes.

La paroi 34 peut également servir de support différents éléments, tels des bras de carter. La paroi peut comprendre des couches annulaires de matériau abradable 38 entre les plateformes des aubes, de sorte à former une barrière entre le flux primaire 18 et la paroi 34.

Le carter composite 28, ou du moins sa paroi 34, peut être réalisée par injection. L'injection peut consister à imprégner un renfort fibreux avec une résine, éventuellement organique, telle de l'époxy. L'imprégnation peut être selon un procédé du type RTM (acronyme anglais pour Resin Transfer Molding). Ou encore, le carter composite, ou du moins sa paroi 34, peut être réalisée à l'aide de tissus préimprégnés d'une résine durcie par autoclave.

Le renfort fibreux peut généralement présenter une symétrie de révolution avec un profil de révolution par rapport à l'axe 14. Le renfort fibreux peut comprendre un empilement ou un enroulement de différentes feuilles fibreuses ou plis fibreux, ou peut comprendre une préforme tissée de manière tridimensionnelle, dite préforme monolithique 2.5D ou 3D. La préforme monolithique et/ou les plis fibreux peuvent s'étendre sur la paroi, et sur au moins une ou plusieurs brides. Eventuellement, l'empilement de plis fibreux est le renfort fibreux, l'intégralité des caractéristiques relatives au renfort fibreux s'appliquant à l'empilement.

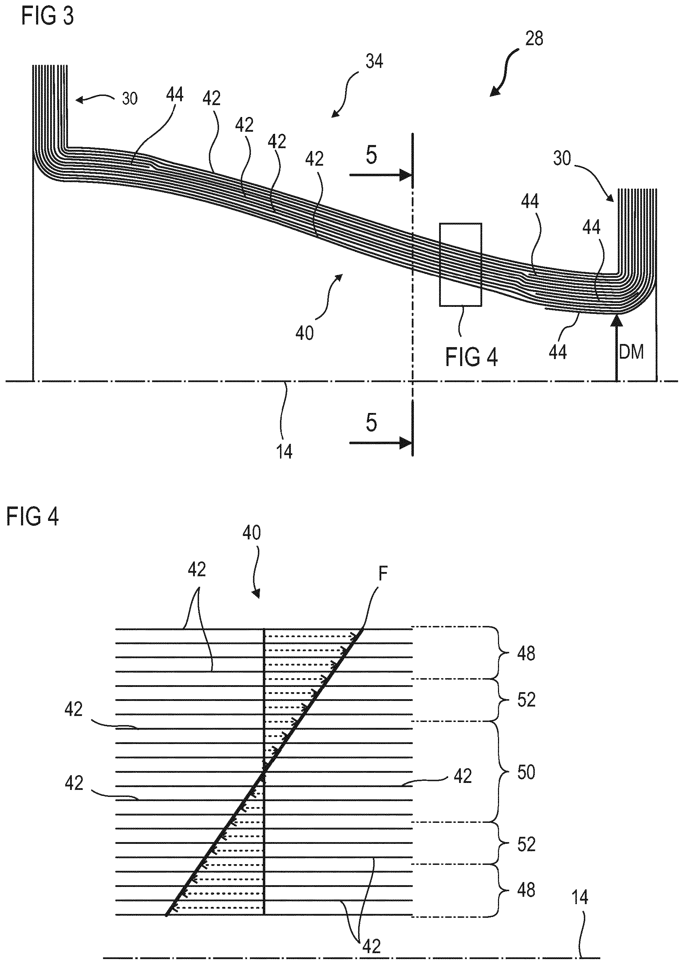

La figure 3 représente une coupe du renfort fibreux du carter composite 28. La coupe est effectuée selon l'axe de rotation 14 de la turbomachine. Le présent enseignement peut être appliqué à tout carter de la turbomachine, tel un carter de soufflante.

Les plis 42 peuvent être des tissés. L'empilement 40 peut comprendre des plis non tissés, la majorité des plis de l'empilement 40 étant alors préférentiellement des plis tissés. Chaque pli 42 peut s'étendre sur une fraction axiale de la paroi 34. Ainsi, le nombre de plis 42 peut varier axialement. Le nombre de plis 42 peut augmenter vers l'aval. Les plis 42 peuvent comprendre des fibres de carbone, et/ou des fibres de graphite, et/ou des fibres de verre et/ou des fibres de Kevlar, et/ou des fibres de carbotitanium.

Le renfort fibreux, éventuellement l'empilement 40 peut former au moins la, préférentiellement au moins chaque bride annulaire 30 du carter composite. Le renfort fibreux, ou au moins un pli fibreux 42 peut joindre chaque bride annulaire. Préférentiellement, le renfort fibreux, ou la majorité des plis fibreux ou tous les plis fibreux 42 de la paroi 34 s'étendent à l'intérieur de chaque bride annulaire, éventuellement sur toute la hauteur radiale.

La paroi 34 présente un diamètre minimal DM à l'une de ses extrémités axiales. L'empilement 40 peut présenter un nombre maximal de plis fibreux 42 au niveau du diamètre minimal DM. Des plis additionnels 44 sont ajoutés de sorte à renforcer la jonction mécanique entre la paroi 34 et la bride 30 aval. Chaque bride annulaire 30 peut comprendre au moins un pli additionnel 44, par exemple disposé localement. Chaque ou au moins un pli additionnel disposé dans une bride annulaire a une forme annulaire et s'étend sur toute ladite bride.

Optionnellement, au moins un ou chaque pli fibreux 42 est tissé selon la forme de la paroi 42, et éventuellement en intégrant la forme de brides 30. Chaque pli 42 peut être préformé avant d'être empilé, éventuellement sa forme peut être ajustée lors de son drapage dans l'empilement. La majorité des plis fibreux 42 peut s'étendre sur toute la longueur axiale de la paroi 34.

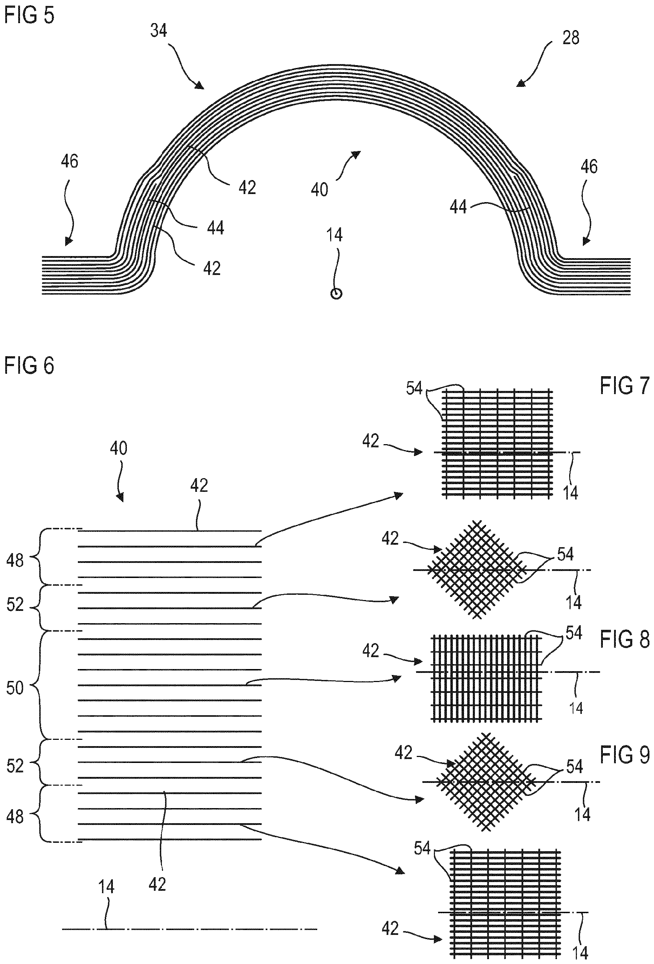

La figure 5 représente une coupe du renfort fibreux suivant l'axe 5-5 tracé sur la figure 3.

Le carter composite peut décrire un cercle. Il peut être formé de deux demi-carters annulaires qui décrivent chacun un demi-cercle. Ainsi, le carter annulaire peut comprendre deux renforts fibreux, et/ou deux empilements 40 formant des demi-cercles. Pour joindre les demi-carters, ceux-ci sont munis de brides axiales 46 de fixation destinées à être fixées les unes aux autres. Les brides axiales bordent les demi-parois 34.

Chaque bride axiale 46 peut être réalisée en composite, avec le renfort fibreux et la matrice. Par conséquent, chaque renfort fibreux et/ou chaque empilement peut former des brides axiales s'étendant radialement. Chaque bride axiale 46 peut être renforcée à l'aide de plis additionnels 44 qui s'étendent également dans la paroi 34. Les plis additionnels axiaux peuvent avoir des formes de bandes s'étendant axialement.

L'empilement 40 peut comprendre au moins un pli 42 qui s'étend dans la paroi 34 et dans chaque bride axiale 46. Eventuellement, la majorité des plis 42 ou chaque pli s'étend(ent) dans la paroi 34 et dans chaque bride axiale 46, éventuellement sur toute la surface de chaque bride axiale.

La figure 6 représente le renfort fibreux de la paroi 34, la répartition des fibres au sein des couches, et l'orientation des fibres au sein des couches.

Selon l'épaisseur de la paroi 34, généralement selon la direction radiale, le renfort fibreux comprend plusieurs couches distinctes éventuellement superposées. Principalement, les couches peuvent se distinguer les unes des autres à l'aide de l'orientation de leurs fibres.

Le renfort fibreux et/ou l'empilement peut présenter, au moins, deux couches externes 48 et une couche centrale 50 disposée entre les couches externes 48. Les couches externes 48 peuvent être visibles depuis l'intérieur ou l'extérieur du renfort fibreux selon la direction radiale. Elles peuvent être les couches les plus éloignées du centre de l'épaisseur de la paroi. Le milieu de l'épaisseur du renfort fibreux peut être situé dans la couche centrale 50. Chaque couche peut représenter au moins 10%, préférentiellement au moins 15%, plus préférentiellement au moins 20% de l'épaisseur du renfort fibreux. Les couches externes et la couche centrale forment la majorité de l'épaisseur du renfort fibreux.

Le renfort fibreux et/ou l'empilement 40 peut comprendre, de manière optionnelle, des couches intercalaires 52. Les couches intercalaires 52 sont disposées de part et d'autre de la couche centrale, de sorte à la séparer des couches externes. Eventuellement, les couches intercalaires 52 sont chacune en contact de la couche centrale 50 et d'une des couches externes 48.

La majorité des fibres du renfort fibreux peuvent être de même nature. La majorité des plis de l'empilement 40 peuvent présenter des fibres de même nature. Préférentiellement, les fibres de l'empilement 40 sont des fibres de même nature, par exemple des fibres de carbone. L'empilement peut être un empilement principal. L'empilement peut être recouvert de plis dont les fibres sont en un autre matériau, telles de fibres de verre pour éviter la corrosion galvanique du carter composite.

L'empilement peut comprendre de 4 à 40 plis tissés 42 , éventuellement avec des fibres de même nature, préférentiellement de 8 à 30 plis tissés 42, éventuellement avec des fibres de même nature, plus préférentiellement de 12 à 16 plis tissés 42, éventuellement avec des fibres de même nature. Eventuellement, chaque couche comprend au moins deux, préférentiellement au moins trois plis tissés 42. Prévoir deux plis tissés similaires dans une même couche permet de favoriser l'imbriquement de leurs mailles, ce qui amplifie la rigidité de la couche.

Les plis tissés 42 peuvent comprendre des torons de fibres, ou faisceaux de fibres tissés selon deux directions, par exemple perpendiculaires. Chaque toron de fibres présente plusieurs fibres selon sa section, par exemple six mille fibres (6k), douze mille fibres (12k), ou d'avantage. Chaque toron de fibres peut être torsadé. Eventuellement, un pli fibreux présente trois directions de tissage.

Dans les cas des couches externes 48 et la couche centrale 50, chaque pli tissé 42 peut l'être à l'aide de torons 54 de chaîne et de torons de trame tel que représenté sur les figures 7 et 8. Les torons de trame peuvent être généralement disposés selon l'axe de rotation 14 de la turbomachine et peuvent comprendre les fibres axiales, et les torons de chaîne peuvent être généralement disposés selon la circonférence de la paroi et peuvent comprendre les fibres circonférentielles. Dans le cas d'une préforme monolithique, les différentes couches peuvent être réalisées avec des même torons.

Dans l'option des couches intercalaires 52, les fibres peuvent être inclinés par rapport à l'axe de rotation 14 de la turbomachine, et éventuellement être hélicoïdales. Les plis intercalaires des couches intercalaires peuvent comprendre des torons 54 inclinés par rapport à l'axe de rotation 14 de la turbomachine. Tel que représenté sur la figure 9, les torons peuvent décrire des formes généralement hélicoïdales. Les torons 54 et donc leurs fibres peuvent être généralement inclinés de +45° et -45° par rapport à l'axe de rotation 14, et/ou par rapport à la circonférence du carter composite. Avantageusement, les plis intercalaires présentent un équilibre entre les fibres de leurs directions de tissage. Leurs torons 54 peuvent présenter des mêmes nombres de fibres. Sur les figures 7, 8 et 9, les torons 54 sont réprésentés espacés les uns des autres pour illustrer la différence de proportion de fibres. Cependant, les torons peuvent optionnellement être serrés les uns contre les autres. La différence de proportion ou de densité de fibre peut être obtenue en utilisant les torons avec plus ou moins de fibres.

Chaque couche peut comprendre une majorité de plis 42 identiques. Eventuellement, les directions majoritaires des fibres 54 des différents plis sont parallèles au sein d'une même couche. Les plis 42 formant les limites de chaque couche peuvent présenter des orientations de fibres parallèles et/ou des directions majoritaires de fibres identiques, éventuellement chacun desdits plis sont identiques. De la sorte, chaque couche peut présenter un comportement mécanique homogène.

Sur la majorité de la surface de la paroi, le renfort fibreux peut présenter une symétrie des fibres selon l'épaisseur de la paroi et par rapport au centre de l'épaisseur de la paroi. La symétrie peut être concernant les orientations de fibres, et/ou les proportions de fibres en fonction de l'orientation, et/ou les directions majoritaires de fibres. La symétrie peut être selon le type de plis. Les couches externes 48 et/ou les couches intercalaires 52 peuvent être des réfléchis deux à deux par rapport à la couche centrale 50.

Afin d'augmenter la rigidité de la paroi face à une déformation composée, la majorité des fibres, éventuellement des plis tissés, de la couche centrale 50 peuvent s'étendre selon la circonférence de la paroi, préférentiellement entre 55% et 90%, ou entre 65% et 85% des fibres, éventuellement des fibres des plis tissés, de la couche centrale 50 s'étendent selon la circonférence de la paroi. La direction principale des fibres de la couche centrale est selon la circonférence du carter.

La majorité des fibres, éventuellement des plis tissés, d'au moins une des couches externes 48, préférentiellement de chaque couche externe 48, peuvent s'étendre le long de la direction axiale de la paroi. Eventuellement entre 55% et 90%, ou entre 65% et 85% des fibres, éventuellement des fibres des plis tissés, d'au moins une, préférentielelment de chaque couche externe 48 s'étend le long de la direction axiale de la paroi.

Par exemple, au moins un pli 42, ou la majorité des plis 42, ou chaque pli 42 d'au moins une, préférentiellement de chaque couche externe 48 comporte(nt) des torons de trame avec neuf mille fibres, et des torons de chaîne avec six mille fibres. Au moins un, ou chaque pli 42, ou la majorité des plis de la couche centrale 50 peut comprendre des torons de trame avec six mille fibres, et des torons de chaîne avec douze mille fibres. Les différents torons tissés peuvent généralement former des sinusoïdes, préférentiellement les sinusoïdes des torons de trame peuvent être les plus marquées.

La figure 4 illustre la déformation F en flexion des plis 42 des couches de l'empilement 40 en cas de déformation du carter composite lors d'un contact avec des aubes rotoriques. Le contact peut être indirect, via une couche de matériau abradable ou friable. Lors d'un tel événement, une portion du carter se déforme en flexion dans une direction radiale, en s'arquant par rapport à l'axe 14.

On observe que les déformations axiales sont maximales au niveau des couches externes 48, réduites dans les couches intercalaires 52, et minimales dans la couche centrale 50. La déformation axiale devient nulle au centre de la couche centrale 50, cette dernière peut présenter une sorte de surface de déformation nulle. D'un côté de cette surface la matière se déforme en compression, et en traction de l'autre côté. Cela signifie que la matière, les fibres et la matrice sont déformées en compression ou en traction. En termes de conception mécanique, il peut être choisi d'appliquer un critère de résistance liée à la traction. Augmenter la proportion de fibres s'étendant axialement permet de renforcer le matériau et donc élever la contrainte axiale admissible. Cette mesure permet de renforcer le carter.

Lors du fonctionnement ou en cas de contact aube-carter, ce dernier tend à augmenter de diamètre ; à gonfler. Le matériau du carter étant alors soumis à une traction selon sa circonférence, il est nécessaire d'augmenter localement la proportion de fibres circonférentielles pour qu'elles travaillent en traction. Il est judicieux d'augmenter cette proportion au niveau de la couche centrale 50 puisque cette dernière n'est pas ou peu soumise à une déformation axiale. Dans le cas des fibres circonférentielles de la couche centrale 50 ou des fibres axiales de chaque couche externe 48, moduler la proportion en fibres selon les directions de tissage présente un double avantage puisque cela permet d'augmenter la résistance mécanique pour une déformation donnée, sans alourdir le carter.

En plus des déformations précitées lors du contact avec les aubes, le carter composite est sollicité en torsion car les aubes entraînent en rotation le carter. Les fibres hélicoïdales des couches intercalaires 52 présentent des orientations optimales pour reprendre les efforts et éviter que le carter ne se vrille. Il est judicieux de placer les fibres hélicoïdales dans les couches intercalaires, couche où la déformation axiales reste significative, car elles sont aptes à résister à la compression. Elles contribuent en outre à résister au gonflement du carter. Leurs positions intercalaires entre la couche centrale 50 et les couches externes 48 leur permettent d'être gainées. Leurs fibres peuvent être maintenues, comprimées, par les couches voisines en cas de déformation ; ce qui évite une décohésion des plis correspondants.

En plus de ces déformations, un carter de turbomachine est soumis à des vibrations lors du fonctionnement de la turbomachine. Leur amplitude devient maximale lors de la perte d'une aube de soufflante tel qu'évoqué ci-dessus. Les vibrations entraînent une déformation avec plusieurs composantes, avec par exemple, une flexion axiale, une torsion axiale, une compression, une ovalisation. En outre, la paroi annulaire du carter peut présenter des modes à diamètres et/ou une onde de déformation tournante selon sa circonférence, ou se déplaçant axialement.

## Revendications

1. Carter composite (28) de turbomachine axiale (2), notamment de compresseur (4 ; 6), le carter (28) comprenant une paroi (34) généralement circulaire avec une matrice et un renfort fibreux tissé,
le renfort fibreux présente, selon son épaisseur, deux couches externes (48) et une couche centrale (50) disposée entre les couches externes, lesdites couches comprenant des fibres s'étendant généralement selon la direction axiale de la paroi circulaire, et des fibres s'étendant généralement selon la circonférence de la paroi circulaire (34),
**caractérisé en ce qu'**au moins
une des couches externes (48) comprend une différence de proportion entre les fibres axiales et les fibres circonférentielles, les fibres axiales étant majoritaires.

2. Carter composite (28) selon la revendication 1, **caractérisé en ce que** la couche centrale (50) comprend une différence de proportion entre les fibres axiales et les fibres circonférentielles, les fibres circonférentielles étant majoritaires.

3. Carter composite (28) selon l'une des revendications 1 à 2, **caractérisé en ce que** le milieu de l'épaisseur du renfort fibreux est situé dans la couche centrale (50), chaque couche représente au moins 10%, préférentiellement au moins de 20% du renfort fibreux.

4. Carter composite (28) selon l'une des revendications 1 à 3, **caractérisé en ce que** le renfort fibreux comprend deux couches intercalaires (52) chacune disposée entre la couche centrale (50) et l'une des couches externes (48).

5. Carter composite (28) selon la revendication 4, **caractérisé en ce que** les couches intercalaires (52) comprennent des fibres hélicoïdales tissées selon des directions généralement perpendiculaires et inclinées à 45° par rapport à la circonférence de la paroi (34).

6. Carter composite (28) selon l'une des revendications 1 à 5, **caractérisé en ce que** sur la majorité de la surface de la paroi (34), le renfort fibreux présente une symétrie dans l'agencement des fibres et/ou une symétrie de proportion de fibres selon l'épaisseur de la paroi et par rapport au milieu de l'épaisseur de la paroi.

7. Carter composite (28) selon l'une des revendications 1 à 6, **caractérisé en ce que** le renfort fibreux comprend un empilement (40) de plis fibreux tissés (42), au moins un des plis (42) est tissé de sorte à être préformé selon la forme de la paroi (34), et la majorité des plis tissés (42) s'étendent sur toute la longueur axiale de la paroi (34).

8. Carter composite (28) selon l'une des revendications 7, **caractérisé en ce que** chaque couche (48 ; 50 ; 52) comprend une majorité de plis fibreux identiques dont les directions de fibres majoritaires sont alignées.

9. Carter composite (28) selon l'une des revendications 7 à 8, **caractérisé en ce que** les plis (42) formant les limites des couches (48 ; 50 ; 52) présentent des orientations de fibres parallèles et des directions de fibres majoritaires alignées, éventuellement lesdits plis sont identiques.

10. Carter composite (28) selon l'une des revendications 7 à 9, **caractérisé en ce que** les fibres des plis sont agencées en torons tissés (54), les torons étant tissés selon une direction de trame et une direction de chaîne, les torons de trame étant disposés le long de l'axe (14) de la turbomachine, et les torons de chaîne étant disposés selon la circonférence de la paroi (34), préférentiellement au moins une des couches externes (48) comprend entre 65% et 85% des fibres axiales, et/ou la couche centrale (50) comprend entre 65% et 85% des fibres circonférentielles.

11. Carter composite (28) selon l'une des revendications 7 à 10, **caractérisé en ce que** la paroi (34) présente un diamètre minimal DM à l'une de ses extrémités axiale, l'empilement comprenant des plis additionnels (44) intercalés au niveau du diamètre minimal DM, entre des plis s'étendant axialement sur toute la longueur axiale de la paroi.

12. Carter composite (28) selon l'une des revendications 7 à 11, **caractérisé en ce que** l'empilement (40) comprend de 4 à 40 plis (42) avec des fibres de même nature, préférentiellement de 10 à 20 plis (42), plus préférentiellement de 12 à 16 plis (42), éventuellement chaque couche (48 ; 50 ; 52) comprend au moins deux plis tissés (42).

13. Carter composite (28) selon l'une des revendications 1 à 12, **caractérisé en ce que** la paroi (34) comprend plusieurs rangées annulaires d'orifices de fixation d'aubes statoriques (26), lesdites rangées annulaires d'orifices étant réparties axialement le long de la paroi.

14. Carter composite (28) selon l'une des revendications 1 à 13, **caractérisé en ce qu'**il comprend au moins une, préférentiellement au moins deux brides annulaires (30) s'étendant radialement et délimitant axialement la paroi (34), chaque bride annulaire étant formée à l'aide du renfort fibreux.

15. Turbomachine axiale (2) comprenant un carter composite (28), **caractérisée en ce que** le carter composite (28) est conforme à l'une des revendications 1 à 14, et **en ce que** le carter composite (28) est formé de deux demi-carters comprenant chacun des brides axiales (46) permettant la jonction des demi-carters, les brides axiales (46) étant formées à l'aide du renfort fibreux .

## Patentansprüche

1. Verbundgehäuse (28) einer axialen Turbomaschine (2), insbesondere eines Kompressors (4; 6), wobei das Gehäuse (28) eine etwa kreisförmige Wand (34) mit einer Matrix und einer gewebten Faserverstärkung umfasst, wobei die Faserverstärkung entlang ihrer Dicke zwei äußere Schichten (48) und eine Kernschicht (50) aufweist, die zwischen den äußeren Schichten angeordnet ist, wobei die Schichten Fasern umfassen, die sich in axialer Richtung der kreisförmigen Wand erstrecken, und Fasern, die sich um den Umfang der kreisförmigen Wand (34) erstrecken,
**dadurch gekennzeichnet, dass**
eine der äußeren Schichten (48) einen Unterschied im Verhältnis zwischen den Axialfasern und den Umfangsfasern aufweist, wobei die Axialfasern die Mehrheit bilden.

2. Verbundgehäuse (28) nach Anspruch 1, **dadurch gekennzeichnet, dass** die Kernschicht (50) einen Unterschied im Verhältnis zwischen den axialen Fasern und den Umfangsfasern aufweist, wobei die Umfangsfasern die Mehrheit bilden.

3. Verbundgehäuse (28) nach Anspruch 1 bis 2, **dadurch gekennzeichnet, dass** die Mitte der Dicke der Faserverstärkung sich in der Kernschicht (50) befindet, wobei jede Schicht mindestens 10%, vorzugsweise mindestens 20% der Faserverstärkung darstellt.

4. Verbundgehäuse (28) nach einem der Ansprüche 1 bis 3, **dadurch gekennzeichnet, dass** die Faserverstärkung zwei Zwischenschichten (52) umfasst, die jeweils zwischen der Kernschicht (50) und einer der äußeren Schichten (48) angeordnet sind.

5. Verbundgehäuse (28) nach Anspruch 4, **dadurch gekennzeichnet**, die Zwischenschichten (52) spiralförmige Fasern umfassen, die in Richtungen gewebt sind, die im Allgemeinen senkrecht sind und um 45 ° zum Umfang der Wand (34) geneigt sind.

6. Verbundgehäuse (28) nach einem der Ansprüche 1 bis 5, **dadurch gekennzeichnet, dass** auf dem größten Teil der Oberfläche der Wand (34) die Faserverstärkung eine Symmetrie in der Anordnung der Fasern und / oder eine Symmetrie des Anteils der Fasern entsprechend der Dicke der Wand und in Bezug auf die Mitte der Dicke von der Wand aufweist.

7. Verbundgehäuse (28) nach einem der Ansprüche 1 bis 6, **dadurch gekennzeichnet, dass** die Faserverstärkung einen Stapel (40) von gewebten faserige Ffalten (42) umfasst, wobei mindestens eine der Lagen (42) so gewebt ist, dass sie entsprechend der Form der Wand (34) vorgeformt wird, und die Mehrzahl der gewebten Falten (42)) sich über die gesamte axiale Länge der Wand (34) erstrecken.

8. Verbundgehäuse (28) nach einem der Ansprüche 7, **dadurch gekennzeichnet, dass** jede Lage (48, 50, 52) eine Mehrzahl identischer faseriger Falten umfasst, wobei die Richtungen der mehrheitlichen Fasern ausgerichtet sind.

9. Verbundgehäuse (28) nach einem der Ansprüche 7 bis 8, **dadurch gekennzeichnet, dass** die Falten (42) die Grenzen der Lagen (48, 50, 52) bilden, die Ausrichtungen der parallelen Fasern und Richtungen der mehrheitlichen ausgerichteten Fasern aufweisen, wobei die Falten möglicherweise identisch sind.

10. Verbundgehäuse (28) nach einem der Ansprüche 7 bis 9, **dadurch gekennzeichnet, dass** die Fasern der Falten in gewebten Strängen (54) angeordnet sind, die Stränge entlang einer Schussrichtung und einer Kettrichtung entlang der Achse (14) der Turbomaschine angeordnet sind, und die Kettstränge entlang des Umfangs der Wand (34) angeordnet sind, wobei vorzugsweise mindestens eine der äußeren Schichten (48) zwischen 65 % und 85 % der axialen Fasern umfasst und/oder die mittlere Schicht (50) zwischen 65 % und 85 % der Umfangsfasern umfasst.

11. Verbundgehäuse (28) nach einem der Ansprüche 7 bis 10, **dadurch gekennzeichnet, dass** die Wand (34) an einem ihrer axialen Enden einen Mindestdurchmesser DM aufweist, wobei der Stapel zusätzliche Falten (44) aufweist, die bei dem Mindestdurchmesser DM zwischen Falten angeordnet sind, die sich axial entlang der gesamten axialen Länge der Wand erstrecken.

12. Verbundgehäuse (28) nach einem der Ansprüche 7 bis 11, **dadurch gekennzeichnet, dass** der Stapel (40) vier bis vierzig Falten (42) mit Fasern derselben Art umfasst, vorzugsweise zehn bis zwanzig Falten (42), noch bevorzugter zwölf bis sechzehn Falten (42), wobei wahlweise jede Lage (48, 50, 52) mindestens zwei gewebte Falten (42) umfasst.

13. Verbundgehäuse (28) nach einem der Ansprüche 1 bis 12, **dadurch gekennzeichnet, dass** dass die Wand (34) eine Vielzahl von ringförmigen Anordnungen von Öffnungen zur Befestigung der Leitschaufeln (26) umfasst, wobei die ringförmigen Anordnungen von Löchern axial entlang der Wand verteilt sind.

14. Verbundgehäuse (28) nach einem der Ansprüche 1 bis 13, **dadurch gekennzeichnet, dass** dass es mindestens einen, vorzugsweise mindestens zwei sich radial erstreckende Ringflansche (30) aufweist, die die Wand (34) axial begrenzen, wobei jeder Ringflansch mit Hilfe der faserigen Verstärkung gebildet wird.

15. Axialturbomaschine (2) mit einem Verbundgehäuse (28), **dadurch gekennzeichnet, dass** das Verbundgehäuse (28) einem der Ansprüche 1 bis 14 entspricht und dass das Verbundgehäuse (28) durch zwei Halbgehäusen ausgebildet ist, die jeweils Axialflansche (46) umfassen, die die Verbindung der Halbgehäuse ermöglichen, wobei die Axialflansche (46) durch die faserige Verstärkung gebildet werden.

## Claims

1. Composite casing (28) of an axial-flow turbomachine (2), in particular for a compressor (4; 6), the casing (28) comprising a generally circular wall (34) having a matrix and a woven fibrous reinforcement, the fibrous reinforcement exhibiting, along its thickness, two external layers (48) and one central layer (50) positioned between the external layers, said layers comprising fibres extending generally in the axial direction of the circular wall, and fibres extending generally around the circumference of the circular wall (34), **characterized in that** at least one of the external layers (48) comprises a difference in proportion between the axial fibres and the circumferential fibres, the axial fibres making up the majority.

2. Composite casing (28) according to Claim 1, **characterized in that** the central layer (50) comprises a difference in proportion between the axial fibres and the circumferential fibres, the circumferential fibres making up the majority.

3. Composite casing (28) according to one of Claims 1 to 2, **characterized in that** the middle of the thickness of the fibrous reinforcement is situated in the central layer (50), each layer representing at least 10%, and preferably at least 20%, of the fibrous reinforcement.

4. Composite casing (28) according to one of Claims 1 to 3, **characterized in that** the fibrous reinforcement comprises two interlayers (52), each being positioned between the central layer (50) and one of the external layers (48).

5. Composite casing (28) according to Claim 4, **characterized in that** the interlayers (52) comprise woven helicoidal fibres in directions that are generally perpendicular and are inclined at 45° in relation to the circumference of the wall (34).

6. Composite casing (28) according to one of Claims 1 to 5, **characterized in that**, on the majority of the surface of the wall (34), the fibrous reinforcement exhibits a symmetry in the arrangement of the fibres and/or a symmetry in the proportion of fibres depending on the thickness of the wall and in relation to the middle of the thickness of the wall.

7. Composite casing (28) according to one of Claims 1 to 6, **characterized in that** the fibrous reinforcement comprises a stack (40) of woven fibrous plies (42), at least one of the plies (42) being woven in such a way as to be preformed according to the form of the wall (34), and the majority of the woven plies (42) extending for the whole of the axial length of the wall (34).

8. Composite casing (28) according to one of Claims 1 to 7, **characterized in that** each layer (48; 50; 52) comprises a majority of identical fibrous plies, of which the directions of the fibres making up the majority are in alignment.

9. Composite casing (28) according to one of Claims 7 to 8, **characterized in that** the plies (42) forming the limits of the layers (48; 50; 52) exhibit orientations of fibres in parallel and directions of fibres making up the majority that are in alignment, said plies possibly being identical.

10. Composite casing (28) according to one of Claims 7 to 9, **characterized in that** the fibres of the plies are arranged in woven strands (54), the strands being woven in a direction of weft and a direction of warp, the weft strands being positioned along the axis (14) of the turbomachine, and the warp strands being positioned around the circumference of the wall (34), preferably at least one of the external layers (48) comprising between 65% and 85% of the axial fibres, and/or the central layer (50) comprising between 65% and 85% of the circumferential fibres.

11. Composite casing (28) according to one of Claims 7 to 10, **characterized in that** the wall (34) exhibits a minimum diameter DM at one of its axial extremities, the stack comprising additional plies (44) interlayered in the area of the minimum diameter DM, between plies extending axially for the whole of the axial length of the wall.

12. Composite casing (28) according to one of Claims 7 to 11, **characterized in that** the stack (40) comprises from 4 to 40 plies (42) having fibres of the same nature, preferably from 10 to 20 plies (42), more preferably from 12 to 16 plies (42), each layer (48; 50; 52) possibly comprising at least two woven plies (42).

13. Composite casing (28) according to one of Claims 1 to 12, **characterized in that** the wall (34) comprises a plurality of annular rows of attachment holes for stator blades (26), said annular rows of holes being distributed axially along the wall.

14. Composite casing (28) according to one of Claims 1 to 13, **characterized in that** it comprises at least one, and preferably at least two, annular flanges (30) extending radially and axially delimiting the wall (34), each annular flange being formed by means of the fibrous reinforcement.

15. Axial-flow turbomachine (2) comprising a composite casing (28), **characterized in that** the composite casing (28) is consistent with one of Claims 1 to 14, and **in that** the composite casing (28) is formed by two half-casings, each comprising the axial flanges (46) allowing the joining of the half-casings, the axial flanges (46) being formed by means of the fibrous reinforcement.
